(19) Europäisches Patentamt

European Patent Office

Office européen des brevets

(11) EP 0 790 691 A1

(12) **DEMANDE DE BREVET EUROPEEN**

(43) Date de publication:
20.08.1997 Bulletin 1997/34

(51) Int. Cl.⁶: $H02J\ 7/10$

(21) Numéro de dépôt: 97200282.8

(22) Date de dépôt: 03.02.1997

(84) Etats contractants désignés:
DE FR GB

(30) Priorité: 14.02.1996 FR 9601814

(71) Demandeur: PHILIPS ELECTRONICS N.V.
5621 BA Eindhoven (NL)

(72) Inventeurs:
- Botto, Jean-Luc
  75008 Paris (FR)
- Silvestre, Cédric
  75008 Paris (FR)

(74) Mandataire: Caron, Jean
Société Civile S.P.I.D.
156, Boulevard Haussmann
75008 Paris (FR)

(54) **Circuit pour la charge rapide d'une batterie**

(57)     Une estimation D(n) de la dérivée première de la tension V(n) d'une batterie, échantillonnée (étape 13) à un instant n, est calculée (étape 14) par un processeur selon la formule

$$D(n) = \{V(n) - V(n\text{-}16)\} + \{V(n\text{-}1) - V(n\text{-}17)\} + \{V(n\text{-}2) - V(n\text{-}18)\} + \ldots\ldots + \{V(n\text{-}15) - V(n\text{-}31)\}$$

les valeurs V(i) ayant été enregistrées au fur et à mesure dans une mémoire.
Un paramètre de décision, appelé P(n), est ensuite calculé (étape 15) selon la formule

$$P(n) = \lambda\ P(n\text{-}1) + (1\text{-}\lambda)\ D(n)$$

où $\lambda$ est un nombre compris entre 0,5 et 1,
et si P(n) est négatif (étape 17), l'arrêt de la charge de la batterie est commandé (étape 18)
    Applications : appareils électroniques portables, notamment téléphones sans fil et téléphones cellulaires.

FIG. 2

EP 0 790 691 A1

## Description

La présente invention concerne un circuit pour charger une batterie rechargeable, comprenant une horloge qui définit des instants équidistants appelés instants d'échantillonnage, et un processeur numérique associé à une mémoire de programme, laquelle contient :

- des instructions pour réaliser, à chaque instant d'échantillonnage, une estimation immédiate de la dérivée première, par rapport au temps, de la tension de la batterie convertie en une valeur numérique par un convertisseur analogique/numérique ,
- des instructions pour déterminer, à chaque instant d'échantillonnage, un paramètre de décision à partir de la variation de la tension de la batterie et pour commander l'arrêt de la charge en fonction du dit paramètre de décision,

L'invention s'applique dans le domaine des appareils électroniques portables, notamment celui des téléphones sans fil et des téléphones cellulaires.

Elle concerne donc aussi un téléphone portable, muni d'un circuit de charge d'une batterie rechargeable.

Un circuit pour la charge rapide d'une batterie est connu du brevet US-4,418,310. Selon ce document, on réalise à intervalles réguliers une mesure de la tension de la batterie, et on arrête la charge selon le simple critère que la variation de tension entre deux mesures successives est descendue en dessous d'une certaine valeur. Il y a un filtre analogique en amont du convertisseur analogique/numérique.

Un objet de l'invention est d'optimiser la détection de fin de charge pour des batteries de type NiCd ou NiMH, même lorsqu'elles sont utilisées pour alimenter un circuit pendant leur recharge. Il faut détecter le plus vite possible la charge dès qu'elle est complète, ceci malgré les variations de tension dues à l'utilisation, afin d'augmenter la durée de vie des batteries, c'est-à-dire le nombre de cycles de charge et décharge.

A cet effet, la mémoire de programme contient des instructions pour réaliser par logiciel un filtrage numérique de la valeur numérique de la dérivée première, et des instructions pour déterminer de façon récursive le paramètre de décision à partir de plusieurs estimations de la dérivée première.

Le moment d'arrêt de la charge ainsi obtenu est fiable, reproductible, et très peu sensible aux variations de température. En outre le circuit est très économique, dans le cas où un convertisseur analogique/numérique et un processeur sont déjà présents dans l'appareil portable.

Avantageusement, pour réaliser le filtrage numérique de la valeur numérique de la dérivée première, le circuit est muni d'instructions qui additionnent à l'estimation immédiate de la dérivée première un nombre prédéterminé d'estimations correspondant chacune à un des instants d'échantillonnage précédents.

Ainsi, l'estimation de la dérivée première est peu sensible aux parasites.

De préférence, pour réaliser une estimation immédiate de la dérivée première, le circuit est muni d'instructions de mémorisation de plus de deux échantillons successifs de la valeur numérique représentant la tension de la batterie, d'instructions de lecture en mémoire d'un échantillon antérieur mais non immédiatement précédent de cette valeur numérique, et d'instructions pour soustraire la valeur antérieure de la valeur immédiate.

Ainsi, les valeurs utilisées sont plus grandes et proportionnellement moins sensibles aux erreurs.

Dans une forme préférée de l'invention, pour réaliser un filtrage numérique, le dit instant d'échantillonnage antérieur mais non immédiatement précédent étant le $n^{ième}$ avant l'instant d'échantillonnage immédiat, le circuit est muni d'instructions pour, à chaque instant d'échantillonnage, additionner à l'estimation immédiate les n-1 estimations successives précédentes.

Ceci procure la moyenne de n estimations, ce qui élimine pratiquement l'effet du bruit.

De préférence, pour déterminer de façon récursive le paramètre de décision à partir de plusieurs estimations de la dérivée première, le circuit est muni d'instructions pour, à un instant d'échantillonnage n pour lequel une estimation, appelée D(n), de la dérivée première, est obtenue, calculer le paramètre de décision, appelé P(n), selon la formule

$$P(n) = \lambda\, P(n-1) + (1-\lambda)\, D(n)$$

où $\lambda$ est un nombre compris entre 0,5 et 1, et d'instructions pour commander l'arrêt de la charge si P(n) est négatif.

Ainsi une protection supplémentaire contre le bruit est obtenue, cependant que le risque d'une absence de détection de fin de charge est évité.

Les circuits des téléphones portables, pendant une communication téléphonique, sont susceptibles de tirer des impulsions de courant importantes qui parasitent la tension de batterie.

Le circuit selon l'invention est donc avantageusement utilisé dans un téléphone portable.

Il est alors possible de recharger la batterie même pendant des phases de communication.

Le circuit de charge est avantageusement contenu dans le téléphone lui même.

Une alimentation sans intelligence suffit alors, à l'extérieur du téléphone.

Ces aspects de l'invention ainsi que d'autres aspects plus détaillés apparaîtront plus clairement grâce à la description suivante d'un mode de réalisation constituant un exemple non limitatif.

La figure 1 représente schématiquement les éléments intervenant dans le circuit selon l'invention.

La figure 2 est un organigramme du processus mis en oeuvre par les instructions du processeur.

La figure 3 présente une courbe de la tension au cours de la charge, et une courbe de la valeur du paramètre de décision.

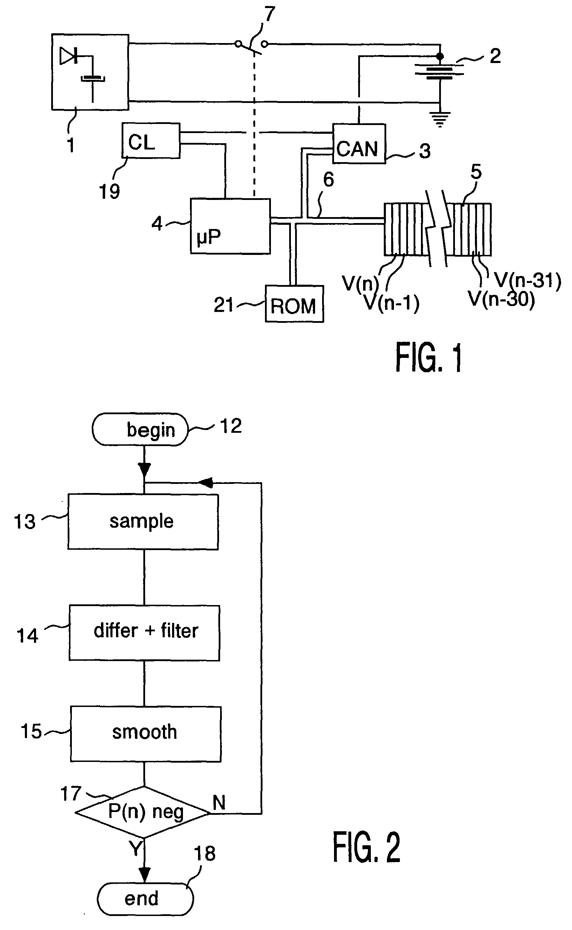

Le circuit représenté par la figure 1 comporte une alimentation en courant 1, pouvant être reliée au secteur alternatif, dont la constitution importe peu : pour une batterie d'un ampère-heure, elle fournira par exemple un courant de charge d'un ampère dans le cas d'une batterie de type NiMH, ou un courant de charge de deux ampères dans le cas d'une batterie de type NiCd. L'alimentation 1 est reliée à une batterie 2 à charger, via un interrupteur 7 commandé par un processeur 4 qui est un microprocesseur, ou un processeur connu sous l'appellation "DSP".

Une borne de la batterie 2 est reliée à l'entrée d'un convertisseur analogique/numérique 3, par exemple un modèle dix bits, qui fournit en sortie une valeur numérique V(n) exprimant la tension de la batterie. Cette valeur est appliquée à un bus 6 au moment voulu pour être mémorisée dans une mémoire 5 de type RAM, également reliée au bus 6. Une horloge 19 fournit de façon connue en soi, à différents constituants du circuit, plusieurs fréquences d'horloge liées entre elles, dont une fréquence d'échantillonnage, fournie au convertisseur analogique/numérique 3. Plus la fréquence d'échantillonnage est élevée, plus la décision d'arrêt de la charge est obtenue rapidement, mais plus la sensibilité au bruit est grande, un compromis est donc nécessaire. Une fréquence de quatre hertz donne de bons résultats dans le cas d'une batterie de téléphone portable.

Une mémoire 21 de type ROM, reliée au processeur 4, contient des instructions de commande du processeur.

La mémoire 5 contient, entre autres, des valeurs successives de la tension de batterie, à savoir la valeur immédiate V(n), la valeur V(n-1) à l'instant d'échantillonnage précédent, et d'autres valeurs antérieures jusqu'à, par exemple, la valeur V(n-31). A chaque instant d'échantillonnage, les 32 valeurs sont décalées d'une position, à la manière d'un registre FIFO.

Le processus illustré par la figure 2 est exécuté pour chaque échantillonnage de rang n ; il comprend, à partir du début 12, la séquence d'opérations suivantes :

- une opération 13 dans laquelle la valeur immédiate de V(n) est échantillonnée et enregistrée dans la mémoire 5.
- une opération 14 dans laquelle est réalisé un filtrage numérique qui fournit une estimation D(n) selon la formule

$$D(n) = \{V(n) - V(n-16)\} + \{V(n-1) - V(n-17)\} + \{V(n-2) - V(n-18)\} + ... + \{V(n-15) - V(n-31)\}$$

toutes les valeurs V(i) étant tirées de la mémoire 5. Il s'agit de l'addition de l'estimation de la dérivée première immédiate $\{V(n) - V(n-16)\}$ et des quinze estimations successives précédentes

$$\{V(n-1) - V(n-17)\} \text{ à } \{V(n-15) - V(n-31)\},$$

correspondant chacune à un des instants d'échantillonnage précédents. Il ne s'agit pas vraiment d'une dérivée puisqu'on ne divise pas chaque différence par le temps que durent seize périodes d'échantillonnage, c'est pourquoi on nomme D(n) "estimation". L'addition de plusieurs valeurs mesurées au cours du temps produit un effet de filtrage. L'estimation D(n) est mémorisée.
- une opération 15 dans laquelle est déterminé le paramètre de décision, appelé P(n), tout en lissant sa variation. Ce paramètre est déterminé à partir de l'estimation D(n) calculée dans l'opération 14, selon la formule

$$P(n) = \lambda \, P(n-1) + (1- \lambda) \, D(n)$$

où $\lambda$ a une valeur comprise entre 0,5 et 1, par exemple 0,95. Le paramètre P(n) est mémorisé, pour pouvoir être relu lors de l'échantillonnage suivant.
- une opération 17 dans laquelle le signe du paramètre P(n) est testé, conduisant à l'arrêt de la charge si P(n) est négatif, ou au retour à l'opération 13 si P(n) est positif ou nul.

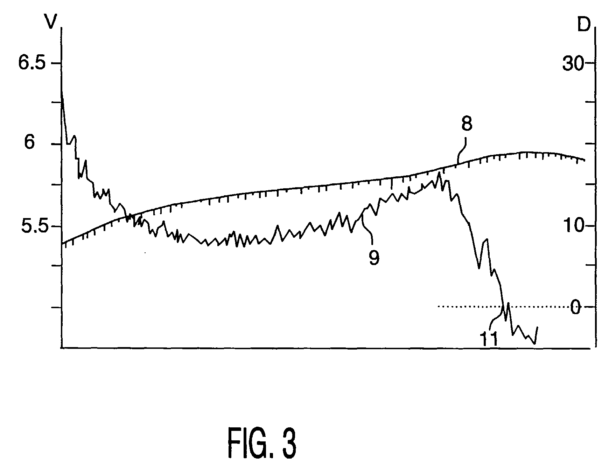

La graduation à gauche de la figure 3 concerne la tension de batterie, représentée par la courbe 8. La courbe est entachée de parasites, produisant des petites impulsions verticales. La tension croît d'abord assez vite jusque vers 5,7 volts, puis moins vite et régulièrement jusqu'à 5,75 volts, puis elle commence à monter plus vite. Dans sa partie la plus à droite, la courbe montre comment la tension évoluerait si l'on n'arrêtait pas la charge : la tension atteindrait un maximum puis redescendrait.

La graduation à droite de la figure 3 concerne le paramètre de décision, représenté par la courbe 9. Du fait des parasites de la tension 8, la courbe 9 est relativement irrégulière. Toutefois les irrégularités seraient d'une amplitude rédhibitoirement plus grande si le filtrage et le lissage décrits plus haut n'étaient pas réalisés : l'instant d'arrêt de la charge serait alors quelque peu aléatoire. Le paramètre de décision décroît d'abord assez vite puis présente un palier aux environs d'une valeur de cinq, et remonte ensuite jusque vers une valeur de quinze pour commencer alors à décroître rapidement. Les chiffres indiqués ne mesurent pas une grandeur particulière, mais sont seulement des chiffres résultant de la formule exposée plus haut, et ils dépendent entre autres de la fréquence d'échantillonnage. Au point référencé 11, le paramètre atteint zéro, et la charge est arrêtée.

## Revendications

1. Circuit pour charger une batterie rechargeable, comprenant une horloge qui définit des instants équidistants appelés instants d'échantillonnage, et un processeur numérique associé à une mémoire de programme, laquelle contient :

   - des instructions pour réaliser, à chaque instant d'échantillonnage, une estimation immédiate de la dérivée première, par rapport au temps, de la tension de la batterie convertie en une valeur numérique par un convertisseur analogique/numérique ,
   - des instructions pour déterminer, à chaque instant d'échantillonnage, un paramètre de décision à partir de la variation de la tension de la batterie et pour commander l'arrêt de la charge en fonction du dit paramètre de décision,

   **caractérisé en ce que** la mémoire de programme contient des instructions pour réaliser par logiciel un filtrage numérique de la valeur numérique de la dérivée première, et des instructions pour déterminer de façon récursive le paramètre de décision à partir de plusieurs estimations de la dérivée première.

2. Circuit de charge selon la revendication 1, **caractérisé en ce que**, pour réaliser le filtrage numérique de la valeur numérique de la dérivée première, il est muni d'instructions qui additionnent à l'estimation immédiate de la dérivée première un nombre prédéterminé d'estimations correspondant chacune à un des instants d'échantillonnage précédents.

3. Circuit de charge selon la revendication 2, **caractérisé en ce que,** pour réaliser une estimation immédiate de la dérivée première, il est muni d'instructions de mémorisation de plus de deux échantillons successifs de la valeur numérique représentant la tension de la batterie, d'instructions de lecture en mémoire d'un échantillon antérieur mais non immédiatement précédent de cette valeur numérique, et d'instructions pour soustraire la valeur antérieure de la valeur immédiate.

4. Circuit de charge selon la revendication 3, **caractérisé en ce que,** pour réaliser un filtrage numérique, le dit instant d'échantillonnage antérieur mais non immédiatement précédent étant le $n^{\text{ième}}$ avant l'instant d'échantillonnage immédiat, il est muni d'instructions pour, à chaque instant d'échantillonnage, additionner à l'estimation immédiate les n-1 estimations successives précédentes.

5. Circuit de charge selon la revendication 2, **caractérisé en ce que**, pour déterminer de façon récursive le paramètre de décision à partir de plusieurs estimations de la dérivée première, il est muni d'instructions pour, à un instant d'échantillonnage n pour lequel une estimation, appelée D(n), de la dérivée première, est obtenue, calculer le paramètre de décision, appelé P(n), selon la formule

$$P(n) = \lambda\, P(n\text{-}1) + (1\text{-}\lambda)\, D(n)$$

   où $\lambda$ est un nombre compris entre 0,5 et 1, l'arrêt de la charge étant commandé si P(n) est négatif.

6. Téléphone portable, **caractérisé en ce qu'**il est muni d'un circuit de charge selon l'une quelconque des revendications 1 à 5.

7. Téléphone portable selon la revendication 6, **caractérisé en ce que** le circuit de charge est contenu dans le téléphone lui même.

FIG. 1

FIG. 2

FIG. 3

Office européen
des brevets

**RAPPORT DE RECHERCHE EUROPEENNE**

Numero de la demande

EP 97 20 0282

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 623 987 A (SGS THOMSON MICROELECTRONICS) 9 Novembre 1994 * colonne 10 - colonne 11; figures 5,8,9 * --- | 1,2 | H02J7/10 |
| X | US 4 418 310 A (BOLLINGER DAVID D) 29 Novembre 1983 * le document en entier * | 1,2 | |
| A | --- | 3-7 | |
| A | EP 0 669 693 A (BLACK & DECKER INC) 30 Août 1995 * colonne 6-8 * --- | 1-7 | |
| A | US 5 268 630 A (BHAGWAT PRADEEP M  ET AL) 7 Décembre 1993 * le document en entier * --- | 1-7 | |
| A | DE 41 10 453 A (SANYO ELECTRIC CO) 17 Octobre 1991 * colonne 1 - colonne 2 * ----- | 1-7 | |

DOMAINES TECHNIQUES
RECHERCHES (Int.Cl.6)

H02J

Le présent rapport a été établi pour toutes les revendications

| Lieu de la recherche | Date d'achèvement de la recherche | Examinateur |
|---|---|---|
| LA HAYE | 12 Juin 1997 | Moyle, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)